# EUROPEAN PATENT APPLICATION

(11) **EP 3 442 100 A1**
(43) Date of publication of application: **13.02.2019**
(21) Application number: 17799166.8
(22) Date of filing: 28.04.2017
(51) Int. Cl.: H02K 3/50

(54) **BUS BAR UNIT AND DYNAMO-ELECTRIC MACHINE**

(30) Priority: 16.05.2016 JP 2016097591
(71) Applicant: KYB Corporation, Tokyo 105-6111 (JP)
(72) Inventor: KAWAGUCHI, Takayuki, Tokyo 105-6111 (JP); UENO, Sayaka, Tokyo 105-6111 (JP)
(74) Representative: Markfort, Iris-Anne Lucie
(86) International application number: PCT/JP2017/016985
(87) International publication number: WO 2017/199736

(57) **Abstract**

A bus bar unit according to an embodiment of the present invention includes an insulation block and first to fourth bus bars. The first bus bar includes a first connection terminal radially projecting from an insulation block. The second bus bar includes a second connection terminal radially projecting from the insulation block. The third bus bar includes a third connection terminal radially projecting from the insulation block and includes at least one terminal portion that passes between a main body portion of the first bus bar and a main body portion of the second bus bar. The fourth bus bar includes a fourth connection terminal radially projecting from the insulation block and includes at least one terminal portion that passes between the main body portion of the first bus bar and the main body portion of the second bus bar.

## Description

### Technical Field

The present invention relates to a bus bar unit for power distribution which is connected to a stator coil and a dynamo-electric machine including the same.

### Background Art

For example, in a three-phase alternate-current motor, an annular bus bar unit that distributes current to respective wirings from a power supply terminal portion is known. For example, Patent Literature 1 has disclosed a bus bar unit including three circular arc-shaped bus bars that are disposed deviated from one another in a circumferential direction and electrically connect coils corresponding to respective phases, a circular arc-shaped, neutral point bus bar that electrically connects the neutral point of each coil, and a bus bar base having triple annular grooves that house all the bus bars.

Further, Patent Literature 2 has disclosed a bus bar module including an insulation member in which circular arc-shaped bus bars of U-, V-, and W-phases and a neutral point are disposed such that two of the circular arc-shaped bus bars of U-, V-, and W-phases are disposed in each stage for the purpose of achieving downsizing while providing insulation between the respective bus bars.

### Citation List

### Patent Literature

Patent Literature 1: Japanese Patent Application Laid-open No. 2015-100267
Patent Literature 2: Japanese Patent Application Laid-open No. 2012-130203

### Disclosure of Invention

### Technical Problem

However, in the configuration described in Patent Literature 2, there is a problem that arrangement positions of connection terminals of the respective bus bars to be connected to the coils (wirings) of the respective phases are limited. For example, at a position at which two bus bars in the same stage are opposed to each other in a radial direction, connection terminals of the respective bus bars cannot be projected in the same direction. It is thus impossible to cope with an increase in number of combinations of coils of the U-, V-, and W-phases.

In view of the above-mentioned circumstances, it is an object of the present invention to provide a bus bar unit capable of easily coping with an increase in number of combinations of coils of respective phases while downsizing the entire bus bar unit and a dynamo-electric machine including the same.

### Solution to Problem

In order to accomplish the above-mentioned object, a bus bar unit according to an embodiment of the present invention includes an annular insulation block, a first bus bar, a second bus bar, a third bus bar, and a fourth bus bar.

The insulation block is constituted by an electrical insulation material and has an axial center parallel to a first axis.

The first bus bar includes a circular arc-shaped, first main body portion disposed inside the insulation block, and a first connection terminal configured to be connectable to a first coil end, including a plurality of terminal portions, and radially projecting from the insulation block.

The second bus bar includes a circular arc-shaped, second main body portion disposed inside the insulation block, and a second connection terminal configured to be connectable to a second coil end, including a plurality of terminal portions, and radially projecting from the insulation block. The second main body portion is disposed away from the first main body portion in the first axis direction.

The third bus bar includes a circular arc-shaped, third main body portion disposed inside the insulation block, and a third connection terminal configured to be connectable to the third coil end, including a plurality of terminal portions, and radially projecting from the insulation block. The third main body portion is disposed radially away from the first main body portion. The third connection terminal includes at least one terminal portion that passes between the first main body portion and the second main body portion.

The fourth bus bar includes a circular arc-shaped, fourth main body portion disposed inside the insulation block, and a fourth connection terminal configured to be connectable to a fourth coil end, including a plurality of terminal portions, and radially projecting from the insulation block. The fourth main body portion is disposed away from the third main body portion in the first axis direction. The fourth connection terminal includes at least one terminal portion that passes between the first main body portion and the second main body portion.

In the bus bar unit, the connection terminals (the third connection terminal and the fourth connection terminal) of the third bus bar and the fourth bus bar each include the at least one terminal portion that passes between the main body portions (the first main body portion and the second main body portion) of the first bus bar and the second bus bar. Thus, the degree of freedom of the arrangement positions of the third connection terminal and the fourth connection terminal is increased. With this configuration, while achieving downsizing of the entire bus bar unit, it becomes possible to easily cope with an increase in number of combinations of the coils of the respective phases.

The insulation block may include a first main surface that covers the first main body portion and the third main body portion, a second main surface that covers the second main body portion and the fourth main body portion, and an outer circumferential surface continuous with respective outer circumferential portions of the first and second main surfaces, and the first connection terminal, the second connection terminal, the third connection terminal, and the fourth connection terminal may be configured to project radially outward from the outer circumferential surface.

With this configuration, the respective connection terminals can be put together in the outer circumferential surface of the insulation block. Thus, it becomes easy to connect the coils to the respective connection terminals.

The first bus bar, the second bus bar, the third bus bar, and fourth bus bar may include a U-phase bus bar connected to one end of a U-phase coil, a V-phase bus bar connected to one end of a V-phase coil, a W-phase bus bar connected to one end of a W-phase coil, and a neutral point bus bar to be connected to other ends of the U-phase coil, the V-phase coil, and the W-phase coil, the first bus bar and the second bus bar may be each disposed on radially outward sides of the third bus bar and the fourth bus bar, and the neutral point bus bar may be either one of the first bus bar or the second bus bar.

The neutral point bus bar includes many connection terminals. Thus, in such a manner that the neutral point bus bar is disposed on a radially outer circumferential side, the respective connection terminals can be easily disposed in the outer circumferential surface of the insulation block without requiring special machining.

The U-phase bus bar, the V-phase bus bar, and the W-phase bus bar may further include external terminals that project from the first main surface in the first axis direction, and the external terminals may each include a joined surface perpendicular to a second axis direction orthogonal to the first axis direction.

With this configuration, it becomes easy to connect a power supply to the U-phase bus bar, the V-phase bus bar, and the W-phase bus bar.

The third bus bar may further include a bent portion that changes a height position of the third connection terminal. The bent portion may be provided in the third main body portion or may be provided in the third connection terminal. In a case where the bent portion is provided in the third main body portion, downsizing (reduction in diameter) of the insulation block in the radial direction can be achieved. In a case where the bent portion is provided in the third connection terminal, downsizing (reduction in thickness) of the insulation block in the axis direction can be achieved.

Such a configuration is also applicable to the fourth bus bar. The fourth bus bar may further include a bent portion that changes a height position of the fourth connection terminal. The bent portion may be provided in the fourth main body portion or may be provided in the fourth connection terminal.

A dynamo-electric machine according to an embodiment of the present invention includes a bus bar unit having the above-mentioned configuration.

### Brief Description of Drawings

[Fig. 1] A general perspective view of a bus bar unit according to an embodiment of the present invention.
[Fig. 2] A see-through perspective view showing an internal structure of the bus bar unit.
[Fig. 3] A see-through top view of the bus bar unit.
[Fig. 4] A see-through bottom view of the bus bar unit.
[Fig. 5] A side view of the bus bar unit.
[Fig. 6] An equivalent circuit diagram of a stator coil to be connected to the bus bar unit.
[Fig. 7] An approximately vertical cross-sectional view of main parts of the bus bar unit.
[Fig. 8] An approximately vertical cross-sectional view of other main parts of the bus bar unit.
[Fig. 9] A main-part perspective view showing a form of a connection terminal in the bus bar unit.
[Fig. 10] A main-part perspective view showing an example of a configuration of a bus bar unit according to another embodiment of the present invention.

### Mode(s) for Carrying Out the Invention

Hereinafter, embodiments of the present invention will be described with reference to the drawings.

### <First Embodiment>

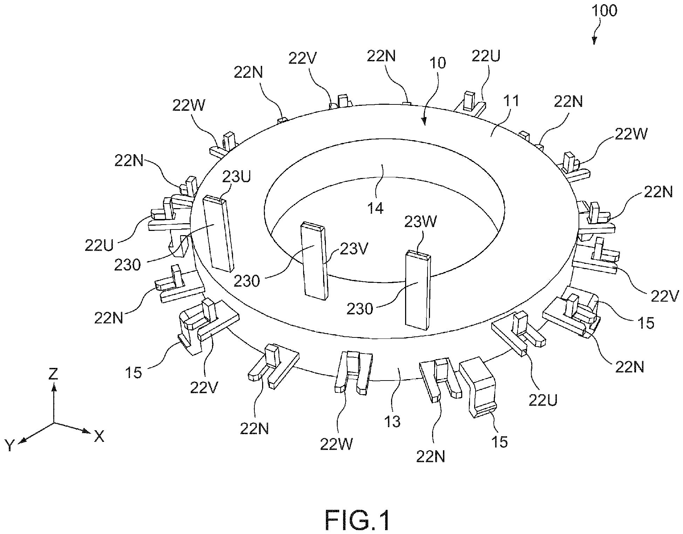

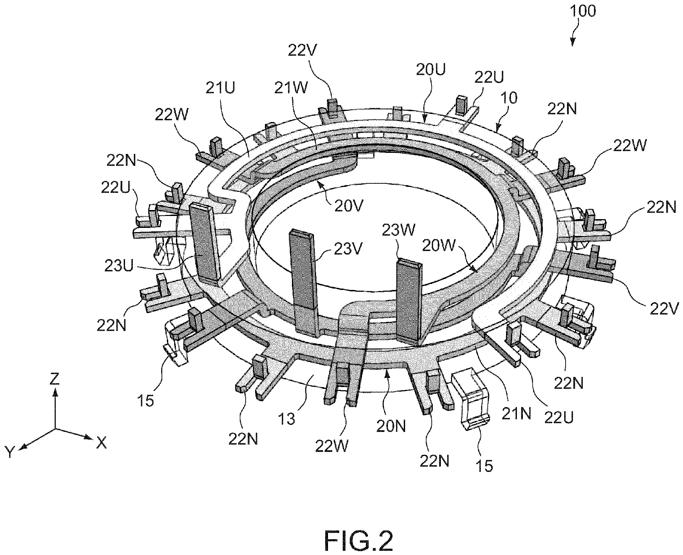

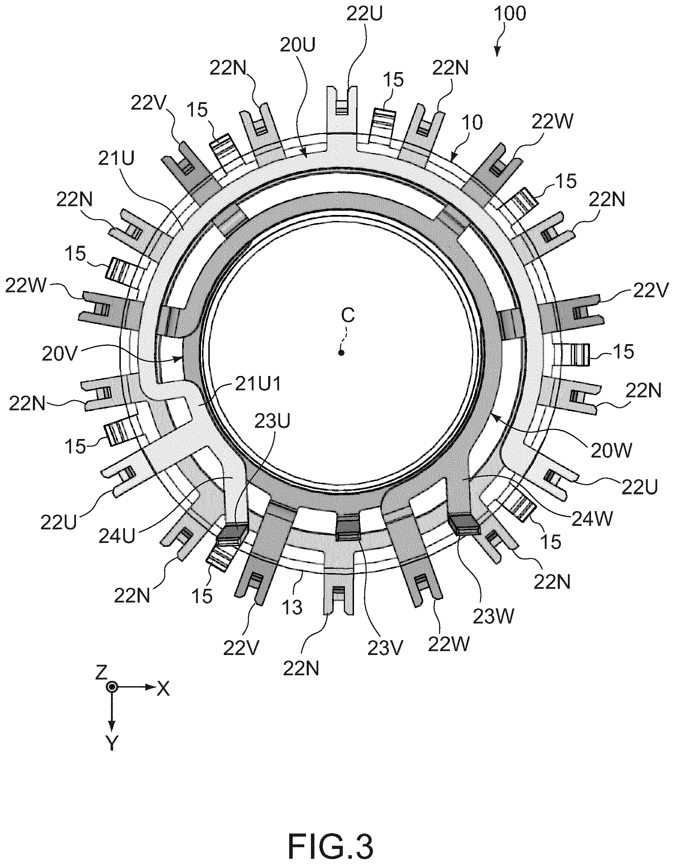

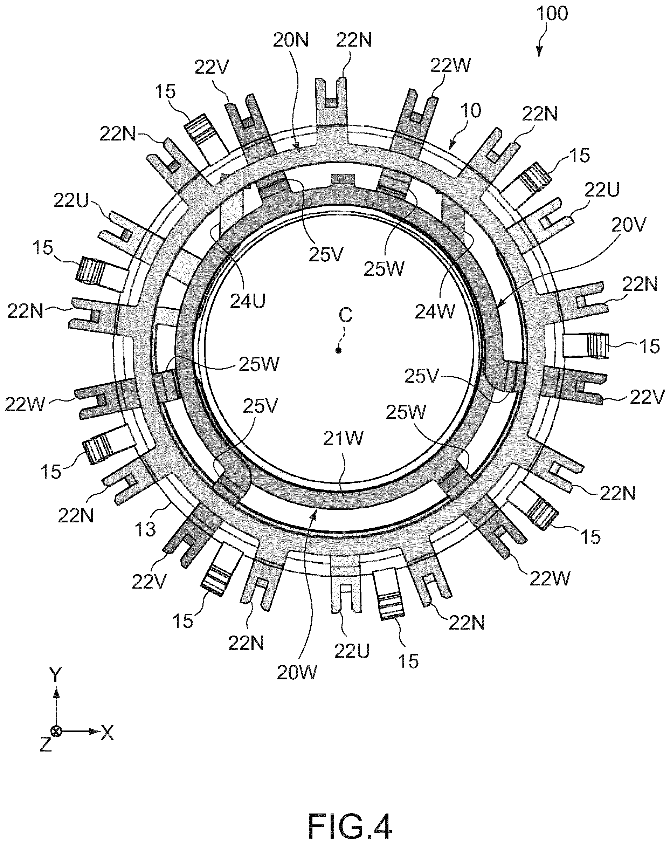

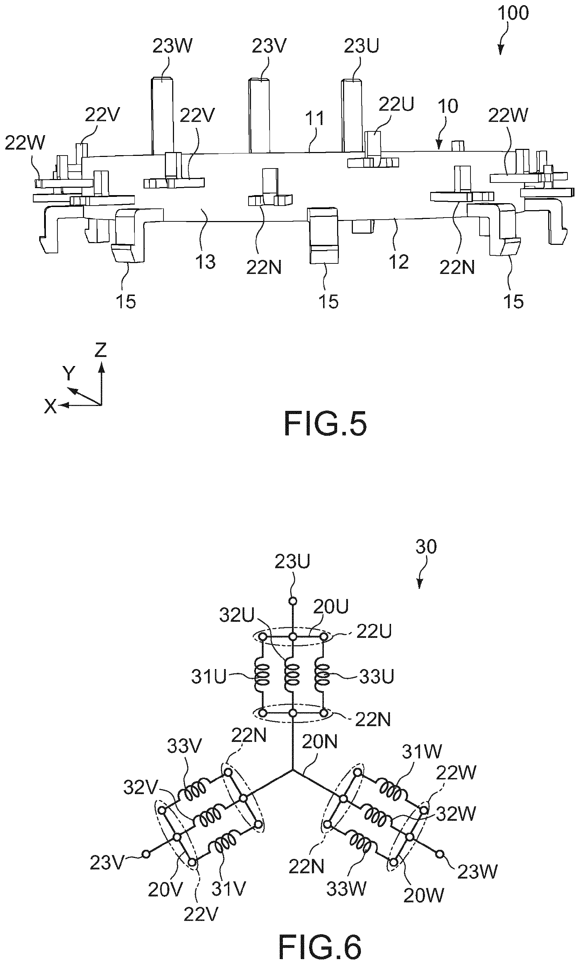

Fig. 1 is a general perspective view of a bus bar unit according to an embodiment of the present invention, Fig. 2 is a see-through perspective view showing an internal structure thereof, Fig. 3 is a see-through top view thereof, Fig. 4 is a see-through bottom view thereof, and Fig. 5 is a side view thereof. In each figure, X-, Y-, and Z-axis directions are three axis directions orthogonal to one another. Here, descriptions will be given assuming that the arrow direction of the Z-axis is upward.

### [Overall Configuration]

A bus bar unit 100 according to this embodiment includes an insulation block 10 and a plurality of bus bars (a U-phase bus bar 20U, a V-phase bus bar 20V, a W-phase bus bar 20W, and a neutral point bus bar 20N) disposed inside the insulation block 10.

The bus bar unit 100 of this embodiment forms a part of a dynamo-electric machine such as a three-phase alternate-current motor and an electric generator. The bus bar unit 100 of this embodiment is fixed to a casing that houses a rotor and the like. The bus bar unit 100 of this embodiment is electrically connected to a stator coil of respective phases (U-, V-, and W-phases) which is wound around a stator core.

### (Insulation Block)

The insulation block 10 supports the plurality of bus bars and provides electrical insulation between those bus bars. As shown in Fig. 1, the insulation block 10 is constituted by an approximately annular molded object having an axial center parallel to the Z-axis direction.

An electrical insulating material constituting the insulation block 10 typically includes a resin material. The resin material is not particularly limited. The resin material includes engineering plastics such as PPS (polyphenylene sulfide) and PBT (polybutylene terephthalate), for example. The resin material may contain a filler such as glass fibers and insulating inorganic particles for the purpose of increasing the strength.

The insulation block 10 includes an upper surface 11 (first main surface), a bottom surface 12 (second main surface), an outer circumferential surface 13 continuous with respective outer circumferential portions of the upper surface 11 and the bottom surface 12, and an inner circumferential surface portion 14 continuous with respective inner circumferential portions of the upper surface 11 and the bottom surface 12.

External terminals 23U, 23V, and 23W of U-, V-, and W-phases are provided in the upper surface 11. The external terminals 23U, 23V, and 23W of U-, V-, and W-phases project upward in Fig. 1 in an axial center direction (Z-axis direction) of the insulation block 10. Neutral point (N-phase) connection terminals 22N, U-phase connection terminals 22U, V-phase connection terminals 22V, and W-phase connection terminals 22W are provided in the outer circumferential surface 13. The neutral point (N-phase) connection terminal 22N, the U-phase connection terminals 22U, the V-phase connection terminals 22V, and the W-phase connection terminals 22W project outward in the radial direction of the insulation block 10.

A plurality of engagement protrusions 15 are provided on the side of the bottom surface 12 of the outer circumferential surface 13 of the insulation portion block 10. The plurality of engagement protrusions 15 can be engaged with an inner circumferential surface of the casing. Those engagement protrusions 15 are disposed away from one another in the circumferential direction of the outer circumferential surface 13. The bus bar unit 100 is fixed to the casing via those engagement protrusions 15.

The size of the insulation block 10 is not particularly limited. In this example, the outer diameter is about 60 mm, the inner diameter is about 37 mm, and the thickness is about 8 mm.

### (Stator Coil)

Fig. 6 is an equivalent circuit diagram of a stator coil 30 to be electrically connected to the bus bar unit 100.

The stator coil 30 includes three U-phase coils 31U to 33U, three V-phase coils 31V to 33V, and three W-phase coils 31W to 31W. The bus bar unit 100 distributes current to be supplied from a power supply (not shown) to the U-phase coils 31U to 33U, the V-phase coils 31V to 33V, and the W-phase coil 31W to 33W via the external terminals 23U, 23V, and 23W. White circles in Fig. 6 denote the connection terminals 22N, 22U, 22V, and 22W and the external terminals 23U, 23V, and 23W of the respective bus bars to be connected to the coils of the respective phases.

One ends (coil ends) of the respective U-phase coils 31U to 33U are connected to the U-phase external terminal 23U via the U-phase bus bar 20U. The other ends (coil ends) of the respective U-phase coils 31U to 33U are connected to the neutral point connection terminals 21N. The respective U-phase coils 31U to 33U are connected in parallel between the U-phase external terminal 23U and the neutral point connection terminals 21N.

The one ends (coil ends) of the respective V-phase coils 31V to 33V are connected to the V-phase external terminal 23V via the V-phase bus bar 20V. The other ends (coil ends) of the respective V-phase coils 31V to 33V are connected to the neutral point connection terminals 21N. The respective V-phase coils 31V to 33V are connected in parallel between the V-phase external terminal 23V and the neutral point connection terminals 21N.

One ends (coil ends) of the respective W-phase coils 31W to 33W are connected to the W-phase external terminal 23W via the W-phase bus bar 20W. The other ends (coil ends) of the respective W-phase coils 31W to 33W are connected to the neutral point connection terminals 21N. The respective W-phase coils 31W to 33W are connected in parallel between the W-phase external terminal 23W and the neutral point connection terminals 21N.

### (Bus bar)

The plurality of bus bars include the U-phase bus bar 20U, the V-phase bus bar 20V, the W-phase bus bar 20W, and the neutral point bus bar 20N. As shown in Fig. 2, those bus bars include circular arc-shaped main body portions 21U, 21V, 21W, and 21N disposed in two upper and lower stages such that two of the circular arc-shaped main body portions 21U, 21V, 21W, and 21N are disposed in each stage.

It should be noted that the main body portion 21N of the neutral point bus bar 20N is formed in an annular shape (see Fig. 4). However, the main body portion 21N of the neutral point bus bar 20N may be formed in a circular arc shape as in the main body portions 21U, 21V, and 21W of the other bus bars 20U, 20V, and 20W. Therefore, descriptions will be given assuming that the main body portion 21N of the neutral point bus bar 20 is also formed in a circular arc shape.

As shown in Figs. 2 to 4, the main body portions 21N, 21U, 21V, and 21W of the respective bus bars are disposed inside the insulation block 10. The resin material constituting the insulation block 10 provides electrical insulation between the main body portions 21N, 21U, 21V, and 21W of the respective bus bars. In this embodiment, the main body portion 21U of the U-phase bus bar 20U and the main body portion 21N of the neutral point bus bar 20N are respectively disposed in upper and lower parts on the outer circumferential side of the insulation block 10, and the main body portion 21W of the W-phase bus bar 20W and the main body portion 21V of the V-phase bus bar 20V are respectively disposed in upper and lower parts on the inner circumferential side of the insulation block 10.

### (U-Phase Bus bar)

As shown in Figs. 2 and 3, the U-phase bus bar 20U (first bus bar) is disposed on a top outer circumferential side of the four bus bars. The U-phase bus bar 20U is constituted by a punching press molded object of a metal plate (e.g., copper plate) having a predetermined thickness (e.g., about 1 mm). The U-phase bus bar 20U includes the main body portion 21U (first main body portion), the U-phase connection terminals 22U (first connection terminal) including the plurality of terminal portions, and the U-phase external terminal 23U.

In this embodiment, the main body portion 21U has a circular arc shape of approximately 240° having an axial center C of the insulation block 10 as a center, and the U-phase connection terminals 22U including a total of three terminal portions are provided at intervals of 120° at both end portions and a middle portion thereof. The main body portion 21U is constituted by a base material having a predetermined width, which is parallel to the XY-plane.

The U-phase connection terminals 22U radially extend from the outer circumferential surface of the main body portion 21U in radial directions thereof. Leading end portions of the U-phase connection terminals 22U project from the outer circumferential surface 13 of the insulation block 10 by a predetermined length. Those three U-phase connection terminals 22U are provided in approximately the same plane as the main body portion 21U. The width of the U-phase connection terminal 22U is not particularly limited. In this embodiment, the U-phase connection terminal 22U is formed to be slightly wider than the main body portion 21U.

The U-phase external terminal 23U is provided at one end portion of the main body portion 21U. The U-phase external terminal 23U extends upward from that end portion via a connection portion 24U. The U-phase external terminal 23U projects from the upper surface 11 of the insulation block 10 by a predetermined length. The U-phase external terminal 23U is constituted by a base material having a predetermined width including a main surface 230 (joined surface) perpendicular to the Y-axis direction. The U-phase external terminal 23U is mounted on a connector (not shown) connected to the power supply. For electrically connecting the U-phase external terminal 23U to the connector, compression connection by press-fit is employed, though not limited thereto. Joining by welding may be employed.

The connection portion 24U is for guiding the U-phase external terminal 23U to a predetermined position of the upper surface 11 of the insulation block 10, and is thus formed in a predetermined shape in the same plane as the main body portion 21U.

### (Neutral Point Bus bar)

As shown in Figs. 2 and 4, the neutral point bus bar 20N (second bus bar) is disposed on a bottom outer circumferential side of the four bus bars. The neutral point bus bar 20N is constituted by a punching press molded object of a metal plate having a predetermined thickness as in the U-phase bus bar 20U. The neutral point bus bar 20N includes the main body portion 21N (second main body portion) and the neutral point connection terminals 22N (second connection terminal) including the plurality of terminal portions.

In this embodiment, the main body portion 21N has an annular shape having the axial center C of the insulation block 10 as a center, and the neutral point connection terminals 22N including a total of nine terminal portions are provided in the outer circumferential surface thereof. The main body portion 21N is constituted by a base material having a predetermined width, which is parallel to the XY-plane. The main body portion 21N is disposed away from the main body portion 21U of the U-phase bus bar 20U by a first distance in the Z-axis direction. The first distance is not particularly limited. The first distance is, for example, approximately 1 mm to 2 mm as long as it can provide a predetermined insulation withstand voltage between the main body portion 21U and the main body portion 21N.

The neutral point connection terminals 22N radially extend from the outer circumferential surface of the main body portion 21N in radial directions thereof. Leading end portions of the neutral point connection terminals 22N project from the outer circumferential surface 13 of the insulation block 10 by a predetermined length. The neutral point connection terminals 22N are provided at intervals of 40° in the outer circumferential surface of the main body portion 21N, and are provided in approximately the same plane as the main body portion 21N. The width of the neutral point connection terminal 22N is not particularly limited. In this embodiment, the neutral point connection terminal 22N is formed to be slightly wider than the main body portion 21N.

### (V-Phase Bus bar)

As shown in Figs. 2 and 4, the V-phase bus bar 20V (fourth bus bar) is disposed on a bottom inner circumferential side of the four bus bars. The V-phase bus bar 20V is constituted by a punching press molded object of a metal plate having a predetermined thickness as in the U-phase bus bar 20U. The V-phase bus bar 20V includes the main body portion 21V (fourth main body portion), the V-phase connection terminals 22V (fourth connection terminal) including the plurality of terminal portions, and the V-phase external terminal 23V.

In this embodiment, the main body portion 21V has a circular arc shape of approximately 240° having the axial center C of the insulation block 10 as a center, and a total of three V-phase connection terminals 22V are provided at intervals of 120° at both end portions and a middle portion thereof. The main body portion 21V is constituted by a base material having a predetermined width, which is parallel to the XY-plane. The main body portion 21V has an outer diameter smaller than that of the main body portion 21N of the neutral point bus bar 20N. The main body portion 21V is disposed away from the main body portion 21N by a second distance in the radial direction. The second distance is not particularly limited. The second distance is, for example, approximately 2 mm to 3 mm as long as it can provide a predetermined insulation withstand voltage between the main body portion 21N and the main body portion 21V.

The V-phase connection terminals 22V radially extend in radial directions thereof from the outer circumferential surface of the main body portion 21V. Leading end portions of the V-phase connection terminals 22V project from the outer circumferential surface 13 of the insulation block 10 by a predetermined length. In this embodiment, two terminal portions of the three V-phase connection terminals 22V, which are positioned at both ends of the main body portion 21V, pass between the main body portion 21U of the U-phase bus bar 20 and the main body portion 21N of the neutral point bus bar 20N, and another terminal portion of the three V-phase connection terminals 22V is positioned inside an open region of the circular arc constituting the main body portion 21U as viewed in the Z-axis direction (see Fig. 3). The width of the V-phase connection terminal 22V is not particularly limited. In this embodiment, the V-phase connection terminal 22V is formed to be slightly wider than the main body portion 21V.

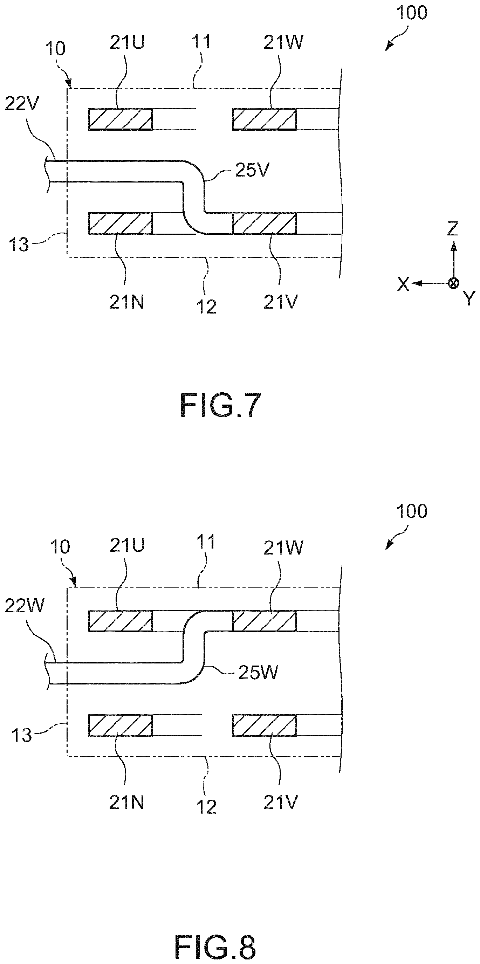

Fig. 7 is a schematic cross-sectional view of main parts of the bus bar unit 100. Each V-phase connection terminal 22V includes a bent portion 25V. As shown in Figs. 4 and 7, the bent portion 25V is a base of the V-phase connection terminal 22V and is provided within the second distance (between the main body portion 21V and the main body portion 21N). The bent portion 25V is formed in a crank shape that changes the height position of the V-phase connection terminal 22V from the height position of the main body portion 21V into the height position between the main body portion 21U of the U-phase bus bar 20U and the main body portion 21N of the neutral point bus bar 20N. Those V-phase connection terminals 22V are each provided at the same height position of the outer circumferential surface 13 of the insulation block 10.

The V-phase external terminal 23V is provided at a predetermined position of the outer circumferential surface of the main body portion 21V. The V-phase external terminal 23V extends upward from that predetermined position. The V-phase external terminal 23V projects from the upper surface 11 of the insulation block 10 by a predetermined length. The V-phase external terminal 23V is constituted by a base material having a predetermined width including a main surface (joined surface) 230 perpendicular to the Y-axis direction. The V-phase external terminal 23V is mounted on a connector (not shown) connected to the power supply. The V-phase external terminal 23V is disposed to be opposed to the U-phase external terminal 23U in the X-axis direction. For electrically connecting the V-phase external terminal 23V to the connector, compression connection by press-fit is employed, though not limited thereto. Joining by welding may be employed.

### (W-Phase Bus bar)

As shown in Figs. 2 and 3, the W-phase bus bar 20W (third bus bar) is disposed on a top inner circumferential side of the four bus bars. The W-phase bus bar 20W is constituted by a punching press molded object of a metal plate having a predetermined thickness as in the U-phase bus bar 20U. The W-phase bus bar 20W includes the main body portion 21W (third main body portion), the W-phase connection terminals 22W (third connection terminal) including the plurality of terminal portions, and the W-phase external terminal 23W.

In this embodiment, the main body portion 21W has a circular arc shape of approximately 240° having the axial center C of the insulation block 10 as a center, and a total of three W-phase connection terminals 22W are provided at intervals of 120° at both end portions and a middle portion thereof. The main body portion 21W is constituted by a base material having a predetermined width, which is parallel to the XY-plane. The main body portion 21W has an outer diameter smaller than that of the main body portion 21U of the U-phase bus bar 20U. The main body portion 21W is disposed away from the main body portion 21U by the second distance in the radial direction. In addition, the main body portion 21W is disposed away from the main body portion 21V of the V-phase bus bar 20V by the first distance in the Z-axis direction.

The W-phase connection terminals 22W radially extend from the outer circumferential surface of the main body portion 21W in radial directions thereof. Leading end portions of W-phase connection terminals 22W project from the outer circumferential surface 13 of the insulation block 10 by a predetermined length. In this embodiment, two terminal portions of the three W-phase connection terminals 22W, which are positioned at one end portion of the main body portion 21W and the middle portion between the both end portions of the main body portion 21W, pass between the main body portion 21U of the U-phase bus bar 20 and the main body portion 21N of the neutral point bus bar 20N, and another terminal portion of the three W-phase connection terminals 22W is positioned inside the open region of the circular arc constituting the main body portion 21U as viewed in the Z-axis direction (see Fig. 3). The width of the W-phase connection terminal 22W is not particularly limited. In this embodiment, the W-phase connection terminal 22W is formed to be slightly wider than the main body portion 21W.

Fig. 8 is a schematic cross-sectional view of main parts of the bus bar unit 100. Each W-phase connection terminal 22W includes a bent portion 25W. As shown in Figs. 4 and 8, the bent portion 25W is provided within the second distance (between the main body portion 21W and the main body portion 21U), which is a base of the W-phase connection terminal 22W. The bent portion 25W is formed in a crank shape that changes the height position of the W-phase connection terminal 22W from the height position of the main body portion 21W to the height position between the main body portion 21U of the U-phase bus bar 20U and the main body portion 21N of the neutral point bus bar 20N. Those W-phase connection terminals 22W are each provided at the same height position of the outer circumferential surface 13 of the insulation block 10, and are provided at the same height position as the V-phase connection terminals 22V (see Fig. 5).

The W-phase external terminal 23W is provided in vicinity of one end portion of the main body portion 21W. The W-phase external terminal 23W extends upward via the connection portion 24W from the vicinity of that end portion. The W-phase external terminal 23W projects from the upper surface 11 of the insulation block 10 by a predetermined length. The W-phase external terminal 23W is constituted by a base material having a predetermined width including a main surface 230 (joined surface) perpendicular to the Y-axis direction. The W-phase external terminal 23W is mounted on a connector (not shown) connected to the power supply. The W-phase external terminal 23W is disposed to be opposed to the V-phase external terminal 23V in the X-axis direction. For electrically connecting the W-phase external terminal 23W to the connector, compression connection by press-fit is employed, though not limited thereto. Joining by welding may be employed.

The connection portion 24W is for guiding the W-phase external terminal 23W to the predetermined position of the upper surface 11 of the insulation block 10, and is formed in a predetermined shape in the same plane as the main body portion 21W.

The connection terminals 22N, 22U, 22V, and 22W of the respective bus bars are each disposed at a predetermined height position of the outer circumferential surface 13 of the insulation block 10, and are each arranged at equal angular (20°) intervals in the circumferential direction as viewed in the Z-axis direction (see Figs. 3 and 4). In particular, in this embodiment, as viewed in the Z-axis direction, the U-phase connection terminals 22U, the V-phase connection terminals 22V, and the W-phase connection terminal W are sequentially arranged with each of the neutral point connection terminals 22N therebetween. With this configuration, it is ensured that wire connection of the stator coil 30 to the respective connection terminals is favorably performed.

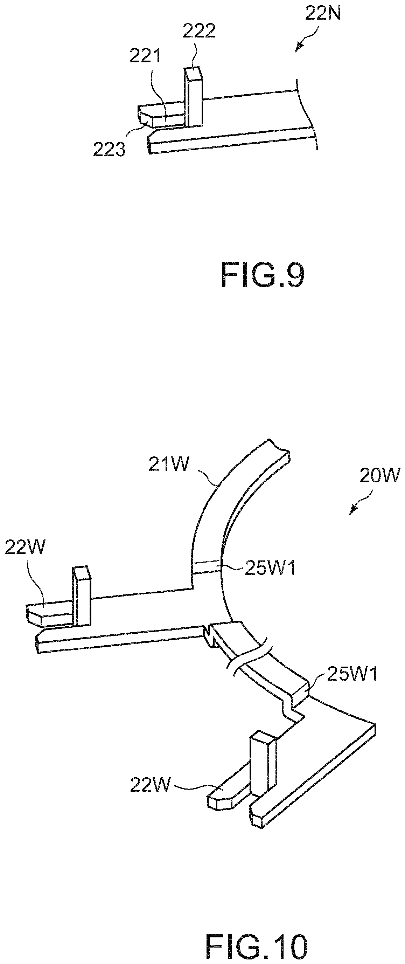

The leading end portions of the connection terminals 22N, 22U, 22V, and 22W of the respective bus bars are each formed in the same shape. As an example, Fig. 9 shows a form of the leading end portion of the neutral point connection terminal 22N. The leading end portion of the connection terminal 22N includes a receiving portion 221 formed at the center portion and an upright rising wall portion 222 continuously provided in the bottom of the receiving portion 221. Each coil end of the stator coil 30 is fixed to the rising wall portion 222 by welding in a state in which it is received in the receiving portion 221. Tapered portions 223 are provided at an open end portion of the receiving portion 221. It is ensured that the coil end is received in the receiving portion 221 radially from the outside.

The bus bar unit 100 is manufactured by insert molding. Although details will be omitted, after the respective bus bars 20N, 20U, 20V, and 20W are disposed in a predetermined positional relationship inside a cavity of a mold, the resin material constituting the insulation block 10 is injection-molded inside the cavity. At this time, considering a filling property of resin into the cavity, an insertion position of an insert pin, and the like, a main body portion of an arbitrary bus bar may be partially deformed. For example, in this embodiment, as shown in Fig. 3, the main body portion 21U of the U-phase bus bar 20U includes a bypass portion 21U1 that causes one end portion thereof to bypass directly above the main body portion 21V of the V-phase bus bar 20V.

### [Actions]

In the bus bar unit 100 configured as described above, the one ends of the three U-phase coils 31U to 33U, the three V-phase coils 31V to 33V, and the three W-phase coils 31W to 33W are respectively connected to the three U-phase connection terminals 21U, the three V-phase connection terminals 21V, and the three W-phase connection terminals 21W. Further, the other ends of the respective coils 31U to 33U, 31V to 33V, and 31W to 33W of the U, V, and W-phases are respectively connected to the nine neutral point connection terminals 21N. The bus bar unit 100 distributes current supplied from the power supply (not shown) to the U-phase coils 31U to 33U, the V-phase coils 31V to 33V, and the W-phase coils 31W to 33W via the external terminals 23U, 23V, and 23W to rotate the rotor at predetermined r.p.m. in a predetermined direction.

In this embodiment, the connection terminals 22V of the V-phase bus bar 20V and the connection terminals 22W of the W-phase bus bar 20W respectively include at least one terminal portion that passes between the main body portion 21U of the U-phase bus bar 20U and the main body portion 21N of the neutral point bus bar 20N. Therefore, also at the position at which two bus bars in the same stage are opposed to each other in the radial direction, the connection terminals of the respective bus bars can be projected in the same direction, and the degree of freedom of the arrangement positions of the V-phase connection terminal 22V and the W-phase connection terminal 22W, for example, can be increased.

Therefore, in accordance with this embodiment, while achieving downsizing of the entire bus bar unit 100, it becomes possible to easily cope with an increase in number of combinations of the coils of the respective phases, for example, with a stator coil including three or more combinations of the coils of the respective phases.

Further, in the above-mentioned embodiments, the connection terminals 22N, 22U, 22V, and 22W of the respective bus bars are all put together in the outer circumferential surface 13 of the insulation block 10 in a predetermined arrangement form. Thus, it becomes easy to connect the coils to the respective connection terminals 22N, 22U, 22V, and 22W. In particular, the neutral point bus bar 20N includes many connection terminals 22N. Thus, in such a manner that the neutral point bus bar 20N is disposed on the radially outer circumferential side of the insulation block 10, the respective connection terminals 22N can be easily disposed in the outer circumferential surface 13 of the insulation block 10 without requiring special machining.

Further, in this embodiment, the connection terminals 22V of the V-phase bus bar 20V and the connection terminals 22W of the W-phase bus bar 20W are respectively provided with the bent portions 25V and 25W that change height positions thereof. In this case, it becomes unnecessary to ensure spaces required for forming the bent portions 25V and 25W in the distance between the V-phase bus bar 20V and the W-phase bus bar 20W and in the distance (first distance) between the U-phase bus bar 20U and the neutral point bus bar 20N. Thus, downsizing (reduction in thickness) of the insulation block 10 in the axis direction can be achieved.

In addition, in the bus bar unit 100 of this embodiment, the external terminals 23U, 23V, and 23W of the respective phases are arranged to be aligned in the X-axis direction. With this configuration, the main surfaces of the respective external terminals 23U, 23V, and 23W are arranged to be perpendicular to the Y-axis direction, which makes it easy to connect with the connectors (not shown) to be connected to the power supply.

Here, the connectors are typically installed in a circuit substrate disposed to be opposed to the upper surface 11 of the bus bar unit 100 in a motor casing, and three connectors are provided corresponding to the respective external terminals 23U, 23V, and 23W. The respective connectors include elastic metal pieces that pinches the main surfaces of those external terminals 23U, 23V, and 23W, and are mounted on the individual external terminals 23U, 23V, and 23W when it is mounted inside the casing of the circuit substrate. As described above, the main surfaces of the external terminals 23U, 23V, and 23W are respectively oriented in the same direction. Therefore, positions at which the respective connectors are suitably mounted on the individual external terminals 23U, 23V, and 23W are uniquely determined. With this configuration, erroneous assembling of the connectors to the external terminals 23U, 23V, and 23W is prevented.

### <Second Embodiment>

Fig. 10 shows a second embodiment of the present invention. Hereinafter, configurations different from those of the first embodiment will be mainly described, configurations similar to those of the first embodiment will be denoted by similar reference signs, and detailed descriptions thereof will be omitted or simplified.

In this embodiment, the bent portions 25V and 25W that change the height positions of the V-phase connection terminal 22V and the W-phase connection terminal 22W into the height position between the U-phase bus bar 20U and the neutral point bus bar 20N are different from those of the first embodiment in that those are provided in the main body portions 21V and 21W.

As shown in Fig. 10, a bent portion 25W1 that changes the height position of the W-phase connection terminals 22W is provided in the main body portion 21W. In accordance with this example, the bent portion 25W1 is constituted by a recess portion. Therefore, the radial region of the main body portion 21W which is required for change of the height position of the W-phase connection terminals 22W can be substantially eliminated. Such a configuration is also applicable to the main body portion 21V in the V-phase bus bar 20V.

In accordance with this embodiment, the distance between the main body portion 21W of the W-phase bus bar 20W and the main body portion 21U of the U-phase bus bar 20U and the distance (second distance) between the main body portions 21V and 21V of the V-phase bus bar 20V and the neutral point bus bar 20N can be reduced, and downsizing (reduction in diameter) of the bus bar unit 100 in the radial direction can be achieved.

Although the embodiments of the present invention have been described above, the present invention is not limited only to the above-mentioned embodiments of the present invention and can be variously modified as a matter of course.

For example, in the above-mentioned embodiments, the bus bar unit for the motor has been exemplified and described, though not limited thereto. The present invention is also applicable to other dynamo-electric machines, i.e., a bus bar unit for an electric generator.

Further, in the above-mentioned embodiments, the neutral point bus bar is disposed on the lower stage side of the outer circumstance of the insulation block, though not limited thereto. The neutral point bus bar may be disposed on the upper stage side of the outer circumstance. Further, the neutral point bus bar may be disposed on the inner circumferential side of the insulation block in a manner that depends on specifications.

In addition, in the above-mentioned embodiments, all the connection terminals of the respective bus bars are disposed in the outer circumferential surface of the insulation block, though not limited thereto. At least some parts of the respective bus bars may be disposed on the side of the inner circumferential surface of the insulation block.

## Claims

1. A bus bar unit, comprising:
an annular insulation block which is constituted by an electrical insulation material and has an axial center parallel to a first axis;
a first bus bar including
a circular arc-shaped, first main body portion disposed inside the insulation block, and
a first connection terminal configured to be connectable to a first coil end, including a plurality of terminal portions, and radially projecting from the insulation block;
a second bus bar including
a circular arc-shaped, second main body portion disposed inside the insulation block, and
a second connection terminal configured to be connectable to a second coil end, including a plurality of terminal portions, and radially projecting from the insulation block, the second main body portion being disposed away from the first main body portion in the first axis direction;
a third bus bar including
a circular arc-shaped, third main body portion disposed inside the insulation block, and
a third connection terminal configured to be connectable to the third coil end, including a plurality of terminal portions, and radially projecting from the insulation block, the third main body portion being disposed radially away from the first main body portion, the third connection terminal including at least one terminal portion that passes between the first main body portion and the second main body portion; and
a fourth bus bar including
a circular arc-shaped, fourth main body portion disposed inside the insulation block, and
a fourth connection terminal configured to be connectable to a fourth coil end, including a plurality of terminal portions, and radially projecting from the insulation block, the fourth main body portion being disposed away from the third main body portion in the first axis direction, the fourth connection terminal including at least one terminal portion that passes between the first main body portion and the second main body portion.

2. The bus bar unit according to claim 1, wherein
the insulation block includes
a first main surface that covers the first main body portion and the third main body portion,
a second main surface that covers the second main body portion and the fourth main body portion, and
an outer circumferential surface continuous with respective outer circumferential portions of the first and second main surfaces, and
the first connection terminal, the second connection terminal, the third connection terminal, and the fourth connection terminal project radially outward from the outer circumferential surface.

3. The bus bar unit according to claim 2, wherein
the first bus bar, the second bus bar, the third bus bar, and fourth bus bar include a U-phase bus bar connected to one end of a U-phase coil, a V-phase bus bar connected to one end of a V-phase coil, a W-phase bus bar connected to one end of a W-phase coil, and a neutral point bus bar to be connected to other ends of the U-phase coil, the V-phase coil, and the W-phase coil,
the first bus bar and the second bus bar are each disposed on radially outward sides of the third bus bar and the fourth bus bar, and
the neutral point bus bar is either one of the first bus bar or the second bus bar.

4. The bus bar unit according to claim 3, wherein
the U-phase bus bar, the V-phase bus bar, and the W-phase bus bar further include external terminals that project from the first main surface in the first axis direction, and
the external terminals each include a joined surface perpendicular to a second axis direction orthogonal to the first axis direction.

5. The bus bar unit according to claim 1, wherein
at least one of the third bus bar or the fourth bus bar further includes a bent portion provided in at least one of the third main body portion or the fourth main body portion to change a height position of at least one of the third connection terminal or the fourth connection terminal.

6. The bus bar unit according to claim 1, wherein
at least one of the third bus bar or the fourth bus bar further includes a bent portion provided in at least one of the third connection terminal or the fourth connection terminal to change a height position of the at least one of the third connection terminal or the fourth connection terminal.

7. A dynamo-electric machine comprising the bus bar unit according to claim 1.
